# EUROPÄISCHE PATENTSCHRIFT

(11) **EP 1 848 978 B1**
(45) Veröffentlichungstag und Bekanntmachung des Hinweises auf die Patenterteilung: **06.04.2011**
(21) Anmeldenummer: 05823012.9
(22) Anmeldetag: 19.12.2005
(51) Int. Cl.: G01M 15/00

(54) **PRÜFSTAND**
TEST STAND
BANC D'ESSAI

(30) Priorität: 16.02.2005 DE 102005007090
(43) Veröffentlichungstag der Anmeldung: 31.10.2007
(73) Patentinhaber: Bayerische Motoren Werke Aktiengesellschaft, 80809 München (DE)
(72) Erfinder: HUETTL, Oskar, 85652 Pliening (DE)
(86) Internationale Anmeldenummer: PCT/EP2005/013665
(87) Internationale Veröffentlichungsnummer: WO 2006/087029

(56) Entgegenhaltungen:
- WO-A-02/42730
- DE-A1- 4 015 818
- DE-A1- 4 017 472
- DE-A1- 19 505 415
- GB-A- 1 496 173
- US-A- 4 160 373
- US-A- 4 586 367
- US-A- 5 546 788
- US-A- 5 821 435
- US-A- 5 918 256
- US-A- 6 112 574
- US-A1- 2004 118 223

## Beschreibung

Die Erfindung bezieht sich auf eine Vorrichtung der im Oberbegriff des ersten Anspruchs angegebenen Art.

Bei Prüfständen für Brennkraftmaschinen, insbesondere für Sportmotoren, ist es üblich, die beim Prüfstandslauf des befeuerten Motors entstehenden Abgase ohne Zwischenschaltung eines motornahen Katalysators über eine gebäudeintegrierte Abgasrohranlage in einen Schornstein und von dort in die Umgebung abzugeben.

Zur Erreichung zulässiger Grenzwerte ist es erforderlich, in die Abgasrohrleitung eine Abgasreinigungsanlage einzubauen, siehe z.B. Dokumente US-A-4,586,367 und US-A-5,821,435.

Gerade bei Sportmotoren besteht aber bei der Verwendung einer Abgasreinigung in der Abgasrohranlage das Problem, dass bei Zündaussetzern verhältnismäßig hohe Mengen von unverbranntem Kohlenwasserstoff in die Abgasrohranlage gelangen und die dort vorhandene Abgasreinigungsanlage in ihrer Funktion beeinträchtigen oder gar zerstören können.

Aufgabe der vorliegenden Erfindung ist es deshalb, einen Prüfstand mit einer gebäudeintegrierten Abgasrohranlage vorzuschlagen, bei dem gereinigte Abgase in die Umgebung abgegeben werden und bei einem Fehlbetrieb des zu prüfenden Motors die Abgasreinigungsanlage nicht beeinträchtigt wird.

Diese Aufgabe wird erfindungsgemäß durch die kennzeichnenden Merkmale des ersten Anspruchs gelöst.

Die Erfindung basiert auf der Idee, dass bei Vorhandensein von unverbrannten Kohlenwasserstoffen im Abgasstrang und damit in der Abgasrohranlage die mit den unverbrannten Kohlenwasserstoffen belasteten Abgase in die Umgebung abgeleitet werden und zwar vor Passieren der heißen Abgasreinigungsanlage. Damit ist sichergestellt, dass explosionsfähige Mengen unverbrannter Kohlenwasserstoffe die Abgasreinigungsanlage nicht erreichen und damit ihre Funktion nicht beeinträchtigt wird.

Da ein gestörter Motorbetrieb nur kurzfristig auftritt und sofort zu einem Abschalten des Prüfstandslaufes führt, werden dementsprechend auch nur geringe Mengen unverbrannter Kohlenwasserstoffe und unbehandelter Abgase in die Umgebung abgeleitet. Es handelt sich hierbei also nur um einen kurzen Notfall, der gegenüber einem regulären Betrieb nicht relevant ist.

Die Unteransprüche beschreiben vorteilhafte Ausgestaltungen der Erfindung.

Durch die Weiterbildung nach Anspruch 2 wird die Sicherheit der Abgasanlage weiter erhöht, da durch das Zumischen von Umgebungsluft in die Abgasrohranlage sofort von Beginn an sichergestellt ist, dass kein zündfähiges Gemisch in der Abgasrohranlage entsteht, wenn unverbrannte Kohlenwasserstoffe eintreten. Die.Umgebungsluft wird hierbei bevorzugt aus dem Prüfstand entnommen.

Die Ausgestaltung der Erfindung gemäß Anspruch 3 hat den Vorteil, dass bei Auftreten eines Störfalles, d.h. unverbrannte Kohlenwasserstoffe in explosionsfähiger Menge sind in die Abgasrohranlage gelangt, der abgesperrte Bereich der Abgasrohranlage mit der Abgasreinigungsanlage mit Frischluft gespült werden kann, so dass dort eventuell vorhandene explosionsfähige Reste von unverbrannten Kohlenwasserstoffen nicht zu einer Reaktion in der Abgasreinigungsanlage führen, die ihren Betrieb beeinträchtigen oder die die Abgasreinigungsanlage sogar zerstören können.

Die Ausgestaltung der Erfindung nach Anspruch 4 hat den Vorteil, dass die in der Abgasrohranlage und in dem Abzweig befindlichen Abgase abgesaugt werden, so dass, da zu Beginn der Abgasrohranlage Umgebungsluft eintreten kann, die gesamte Abgasanlage bis zu der Abzweigleitung von unverbrannten Kohlenwasserstoffen im Störfall gereinigt werden kann.

Da durch die relativ große Länge der Abgasrohranlage und der Zumischung von Umgebungsluft direkt zu Beginn der Abgasrohranlage die Temperatur der Abgase bei Erreichen der Abgasreinigungsanlage so weit gesunken sind, dass deren Funktion nicht sicher gewährleistet ist, wird gemäß Anspruch 5 eine Heizeinrichtung vorgesehen.

Um die Heizleistung zu begrenzen, wird weiterhin nach Anspruch 6 vorgeschlagen, einen Wärmetauscher in der Abgasrohranlage vorzusehen, der gemäß Anspruch 7 von den heißen Abgasen hinter der Abgasreinigungsanlage die Wärme aufnehmen kann.

Vorteilhafterweise wird als Abgasreinigungsanlage ein Oxidations-Katalysator verwendet, wie Anspruch 8 vorschlägt.

Die Weiterbildung nach Anspruch 9 hat den Vorteil, dass eine zügige Abführung der Abgase in der Abgasrohranlage gewährleistet ist.

Im Folgenden wird die Erfindung anhand eines bevorzugten Ausführungsbeispiels näher beschrieben.

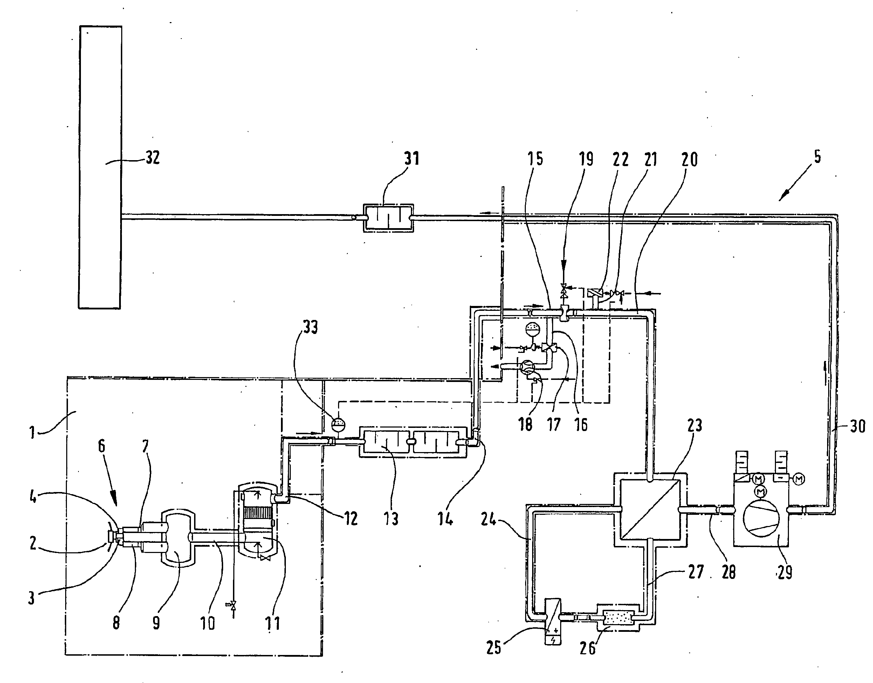

In der einzigen Figur ist schematisiert ein Prüfstand mit der erfindungsgemäßen Abgasrohranlage dargestellt.

In einem Prüfstand 1 wird ein Motor 2 ohne geprüft. Seine Abgase gelangen über die beide Abgasleitungen 3 und 4 zu der erfindungsgemäß aufgebauten Abgasrohranlage 5. In den Abgasleitungen 3 und 4 ist keinerlei Abgasreinigungseinrichtung eingebaut.

Die Abgasrohranlage 5 weist an ihrem Einlass 6 zwei zum Prüfstand 1 hin offene Rohrleitungen 7 und 8 auf, die derart dimensioniert sind, dass die Abgasleitungen 3 und 4 eingesteckt werden können und dass genügend Freiraum am Beginn 6 verbleibt, dass ebenfalls große Mengen von Umgebungsluft aus dem Prüfstand 1 mit angesaugt werden können.

Die Rohrleitungen 7 und 8 münden in einem Pufferbehälter 9, der zur Beruhigung und Vergleichmäßigung der Strömung dient.

Unter Zwischenschaltung einer relativ kurzen Rohrleitung 10 gelangen dann die Abgase in einen Abgasfilter 11, in dem sie mehrere Filter durchströmen müssen, um von Feinststäuben gereinigt zu werden, die den Betrieb der Abgasreinigungsanlage beeinträchtigen würden. Der Abgasfilter 11 kann weiterhin mit einer Wasserverneblungsanlage zur Löschung von Filterbränden ausgestattet sein und dient dann auch als Flammendurchschlagsicherung zur Abgrenzung von Brandabschnitten. Nach Durchströmen des Abgasfilters 11 gelangen die von Stäuben gereinigten Abgase über einen Rohrleitungsabschnitt 12 zu einer Schalldämpfergruppe 13.

Von dort strömen die Abgase über den Rohrleitungsabschnitt 14 zu dem Abzweigpunkt 15. In 15 zweigt eine Abzweigleitung 16 ab, die von einem ersten Absperrventil 17 geöffnet oder geschlossen werden kann. Hinter dem ersten Absperrventil 17 befindet sich noch ein Saugventilator 18. Anschließend mündet die Abzweigleitung 16 in die Umgebung.

In Strömungsrichtung hinter dem Abzweigpunkt 15 befindet sich in dem Rohrleitungsabschnitt 14 ein zweites Absperrventil 19. Nach Passieren des zweiten Absperrventils 19 gelangen die Abgase in den Rohrleitungsabschnitt 20, in den auch eine Zufuhrleitung 21 mündet, deren umgebungsseitige Öffnung von einem dritten Absperrventil 22 beherrscht wird.

Der Rohrleitungsabschnitt 20 führt die Abgase zu einem Kreuzstromwärmetauscher 23, von dort über den Rohrleitungsabschnitt 24 zu einer Heizeinrichtung 25 und einer Abgasreinigungseinrichtung 26, die als OxidationsKatalysator aufgebaut ist.

Von dort gelangen die gereinigten und dabei erhitzten Abgase über den Rohrleitungsabschnitt 27 zur Wärmeaufnahmeseite des Kreuzstromwärmetauschers 23,bei dem sie ihre Wärme an das über den Rohrleitungsabschnitt 20 zugeführte Abgas erwärmen.

Anschließend gelangen die im Kreuzstromwärmetauscher 23 abgekühlten Abgase über einen Rohrleitungsabschnitt 28 zu einem Sauggebläse 29, das die gereinigten und abgekühlten Abgase über einen Rohrleitungsabschnitt 30, einen weiteren Schalldämpfer 31 zu einem Schornstein 32 führt, in dem die Abgase in die Umgebung entlassen werden.

Die Absperrventile 16, 19 und 22 werden von einem Sensor 33 über eine nicht dargestellte Steuerschaltung angesteuert. Der Sensor 33 ist hierbei in dem Rohrleitungsabschnitt 12 zwischen dem Abgasfilter 11 und den Schalldämpfern 13 angeordnet.

Misst der Sensor 33 unverbrannte Kohlenwasserstoffe im Abgas, so wird sofort das Absperrventil 19 geschlossen, das Absperrventil 17 und 22 geöffnet. Weiterhin läuft der Saugventilator 18 an.

Damit gelangen die mit unverbrannten Kohlenwasserstoffen beladenen Abgase in die Abzweigleitung 16 und damit in die Umgebung. Der auf das Absperrventil 19 folgende Teil der Abgasrohranlage wird von diesen mit unverbrannten Kohlenwasserstoffen versehenen Abgasen nicht durchströmt.

Durch das Öffnen des Absperrventiles 22 gelangt in diesen Teil der Abgasrohranlage Frischluft, die den Kreuzstromwärmetauscher 23, die Heizeinrichtung 25, die Abgasreinigungseinrichtung 26 und den Ventilator 29 durchströmt und so alle dort vorhandenen Abgase über den Schornstein 32 in die Umgebung abgibt. Da gleichzeitig mit der Detektierung von einer zu hohen Menge unverbrannter Kohlenwasserstoffe im Abgas der zu prüfende Motor stillgesetzt wird, wird damit sicher verhindert, dass die Abgasreinigungsanlage beschädigt oder gar zerstört wird.

Durch das Zumischen von Umgebungsluft am Einlass 6 der Abgasrohranlage 5 wird verhindert, dass in den mit einer zu hohen Menge an unverbrannten Kohlenwasserstoffen beladenem Abgas durchströmten Rohrleitungsabschnitten und Einbauten ein zündfähiges Gemisch gebildet wird.

Bei entsprechender Dimensionierung und Streckenlängen der einzelnen Rohrabschnitte können auf dem Prüfstand 1 Motoren mit einer Leistung von mehreren 100 kW geprüft werden, deren Kraftstoffverbrauch bis zu 200 kg pro Stunde betragen kann. Auch Abgase mit Abgastemperaturen bei Eintritt in die Abgasrohranlage 5 von bis zu 1000° können problemlos gereinigt werden.

Ein Störfall, bei dem kurzfristig bis zu 1 kg unverbrannter Kraftstoff in die Abgasrohranlage eintreten kann, kann aufgrund der erfindungsgemäßen Anordnung problemlos bewältigt werden, d.h. die mit den unverbrannten Kohlenwasserstoffen beladenen Abgase werden über die Abzweigleitung 16 problemlos in die Umgebung abgeleitet. In den Teil der Abgasrohranlage, in dem sich die Abgasreinigungseinrichtung befindet, treten keine unverbrannten Kohlenwasserstoffe ein, die die Abgasanlage beeinträchtigen bzw. zerstören könnten. Aufgrund der Verdünnung der Abgase zu Beginn der Abgasrohranlage wird zudem auch sicher verhindert, dass sich ein zündfähiges Gemisch in dem von den Kohlenwasserstoffen durchströmten Teil der Abgasrohranlage bis zum Abzweigpunkt 15 bilden kann.

## Patentansprüche

1. Prüfstand mit einer Abgasrohranlage zum Ableiten von Abgase einer auf dem Prüfstand befeuerten Brennkraftmaschine in die Umgebung, **dadurch gekennzeichnet, dass** in der Abgasrohranlage (5) in Strömungsrichtung der Abgase zuerst eine Abzweigleitung (16) in die Umgebung mit einem ersten Absperrventil (17), dann ein zweites Absperrventil (19) und danach eine Abgasreinigungsanlage (26) vorgesehen sind.

2. Prüfstand nach Anspruch 1,
**dadurch gekennzeichnet, dass** am Einlass (6) der Abgasrohranlage (5) eine Zufuhr von Umgebungsluft vorgesehen ist.

3. Prüfstand nach Anspruch 1 oder 2,
**dadurch gekennzeichnet, dass** in Strömungsrichtung der Abgase hinter dem zweiten Absperrventil (19) eine Zufuhrleitung (21) mit einem dritten Absperrventil (22) zum Zuführen von Umgebungsluft in die Abgasrohranlage (5) eingebaut ist.

4. Prüfstand nach einem der vorangegangenen Ansprüche,
**dadurch gekennzeichnet, dass** in Strömungsrichtung der Abgase hinter dem ersten Absperrventil (16) ein Saugventilator (18) in der Abzweigleitung (16) eingebaut ist.

5. Prüfstand nach einem der vorangegangenen Ansprüche,
**dadurch gekennzeichnet, dass** in Strömungsrichtung der Abgase vor der Abgasreinigungsanlage (26) eine Heizeinrichtung (25) vorgesehen ist.

6. Prüfstand nach einem der vorangegangenen Ansprüche,
**dadurch gekennzeichnet, dass** vor der Heizeinrichtung (25) ein Wärmetauscher (23) in der Abgasrohranlage (5) vorgesehen ist.

7. Prüfstand nach einem der vorangegangenen Ansprüche,
**dadurch gekennzeichnet, dass** der Wärmetauscher als Kreuzstromwärmetauscher (23) aufgebaut ist, dessen wärmeabgebende Seite mit der Abgasrohranlage (5) hinter der Abgasreinigungsanlage (26) verbunden ist.

8. Prüfstand nach einem der vorangegangenen Ansprüche,
**dadurch gekennzeichnet, dass** als Abgasreinigungsanlage (26) ein Oxidationskatalysator verwendet wird.

9. Prüfstand nach einem der vorangegangenen Ansprüche,
**dadurch gekennzeichnet, dass** in Strömungsrichtung der Abgase hinter der wärmeabgebenden Seite des Kreuzstromwärmetauschers (23) ein Saugebläse (29) in der Abgasrohranlage (5) eingebaut ist.

## Claims

1. A test stand comprising an exhaust system for discharging exhaust gases into the environment from an internal combustion engine fuelled on the test stand, **characterised in that** the exhaust system (5), in the direction of flow of the exhaust gases, comprises a pipe (16) branching into the environment and with a first shut-off valve (17), followed by a second shut-off valve (19) and by an exhaust gas purification system (26).

2. A test stand according to claim 1, **characterised in that** a supply of ambient air is provided at the inlet (6) of the exhaust system (5).

3. A test stand according to claim 1 or claim 2, **characterised in that**, in the direction of flow of the exhaust gases, a supply pipe (21) comprising a third shut-off valve (22) is incorporated behind the second shut-off valve (19) for supplying ambient air to the exhaust system (5).

4. A test stand according to any of the preceding claims, **characterised in that** a suction fan (18) is incorporated in the branch pipe (16) behind the first shut-off valve (16) in the direction of flow of the exhaust gases.

5. A test stand according to any of the preceding claims, **characterised in that** a heater (25) is provided in front of the exhaust gas purification system (26) in the direction of flow of the exhaust gases.

6. A test stand according to any of the preceding claims, **characterised in that** a heat exchanger (23) is provided in the exhaust system (5) upstream of the heater (25).

7. A test stand according to any of the preceding claims, **characterised in that** the heat exchanger is a counter-current heat exchanger (23), the heat-emitting side whereof is connected to the exhaust system (5) behind the exhaust gas purification system (26).

8. A test stand according to any of the preceding claims, **characterised in that** the exhaust gas purification system (26) is an oxidation catalyser.

9. A test stand according to any of the preceding claims, **characterised in that**, in the direction of flow of the exhaust gases, an extractor (29) is incorporated in the exhaust system (5) behind the heat-emitting side of the counter-current heat exchanger (23).

## Revendications

1. Banc d'essai comportant une installation de conduite de gaz d'échappement pour évacuer à l'extérieur les gaz d'échappement d'un moteur thermique installé et fonctionnant sur le banc d'essai,
banc d'essai **caractérisé en ce que**
l'installation de conduite de gaz d'échappement (5) comporte dans le sens de passage des gaz d'échappement, tout d'abord une conduite de dérivation (16) vers l'extérieur équipée d'une première soupape d'arrêt (17), puis d'une seconde soupape d'arrêt (19) et ensuite une installation de nettoyage des gaz d'échappement (26).

2. Banc d'essai selon la revendication 1,
**caractérisé en ce que**
l'entrée (6) de l'installation de conduite de gaz d'échappement (5) comporte une alimentation en air ambiant.

3. Banc d'essai selon la revendication 1 ou 2,
**caractérisé en ce que**
dans le sens de passage des gaz d'échappement, en aval de la seconde soupape d'arrêt (19), il est prévu une conduite d'alimentation (21) équipée d'une troisième soupape d'arrêt (22) pour fournir de l'air ambiant à l'installation d'échappement (5) de gaz brut.

4. Banc d'essai selon l'une des revendications précédentes,
**caractérisé en ce que**
dans le sens de l'écoulement des gaz d'échappement, en aval de la première soupape d'arrêt (16), l'installation comporte un ventilateur aspirant (18) dans la conduite de dérivation (16).

5. Banc d'essai selon l'une des revendications précédentes,
**caractérisé par**
une installation de chauffage (25) en amont de l'installation de nettoyage des gaz d'échappement (26) selon le sens de passage des gaz d'échappement.

6. Banc d'essai selon l'une des revendications précédentes,
**caractérisé par**
un échangeur de chaleur (23) équipant l'installation de conduite de gaz d'échappement (5) en amont de l'installation de chauffage (25).

7. Banc d'essai selon l'une des revendications précédentes,
**caractérisé en ce que**
l'échangeur de chaleur est un échangeur de chaleur à flux croisé (23) dont le côté fournissant la chaleur, est relié à l'installation de conduite de gaz d'échappement (5) en aval de l'installation de nettoyage des gaz d'échappement (26).

8. Banc d'essai selon l'une des revendications précédentes,
**caractérisé en ce que**
l'installation de nettoyage des gaz d'échappement (26) est un catalyseur d'oxydation.

9. Banc d'essai selon l'une des revendications précédentes,
**caractérisé en ce que**
dans le sens de passage des gaz d'échappement, en aval du côté dégageant la chaleur dans l'échangeur de chaleur à flux croisés (23), l'installation de conduite de gaz d'échappement (5) intègre une soufflante (29).
